(19)

Europäisches
Patentamt
European
Patent Office
Office européen
des brevets

(11)　**EP 2 431 595 B1**

(12)　　　　**EUROPEAN PATENT SPECIFICATION**

(45) Date of publication and mention
of the grant of the patent:
**04.01.2017　Bulletin 2017/01**

(51) Int Cl.:
*F02D 41/14* [(2006.01)]　　*G01M 15/06* [(2006.01)]
*F02D 41/34* [(2006.01)]

(21) Application number: **11181724.3**

(22) Date of filing: **16.09.2011**

(54) **Method of estimating a combustion index and/or the indicated torque in a cylinder of a four stroke internal combustion engine with spontaneous mixture ignition**

Verfahren zur Einschätzung des Verbrennungsindex und/oder des angezeigten Drehmoments in einem Zylinder eines Viertakt-Verbrennungsmotors mit spontaner Mischzündung

Procédé pour estimer un indice de combustion et/ou le couple indiqué dans un cylindre de moteur à combustion interne à quatre temps doté d'une ignition spontanée du mélange

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2010　IT BO20100562**

(43) Date of publication of application:
**21.03.2012　Bulletin 2012/12**

(73) Proprietor: **Magneti Marelli S.p.A.**
**Corbetta (MI) (IT)**

(72) Inventors:
• **Serra, Gabriele**
**40068 S. Lazzardo di Savena (IT)**

• **De Cesare, Matteo**
**71017 Torremaggiore (IT)**
• **Stola, Federico**
**40138 Bologna (IT)**
• **Ponti, Fabrizio**
**47100 Forli' (IT)**

(74) Representative: **Bergadano, Mirko et al**
**Studio Torta S.p.A.**
**Via Viotti, 9**
**10121 Torino (IT)**

(56) References cited:
**EP-A1- 2 022 967　　US-A1- 2009 312 931**

EP 2 431 595 B1

# EP 2 431 595 B1

**Description**

<u>TECHNICAL FIELD</u>

The present invention relates to a method of estimating a combustion index and/or the indicated torque in a cylinder of a four stroke internal combustion engine with spontaneous mixture ignition.

The present invention has advantageous application in the estimation of the MFB50 combustion index of the MFB50 combustion index (50% Mass Fraction Burnt - i.e. the crank angle at which 50% of the fuel mass has been burnt in a cylinder) in an internal combustion engine with spontaneous mixture ignition to which in the following discussion it will be made explicit reference without losing generality because of it.

<u>BACKGROUND ART</u>

In internal combustion engines with controlled mixture ignition (i.e. in internal combustion engines operating according to the "Otto" cycle and fed with gasoline, methane, LPG or the like) it has been known for many years to use as control magnitude the MFB50 combustion index. Indeed, in an internal combustion engine with controlled mixture ignition, the starting instant of combustion (i.e. the sparking instant of the ignition spark) is certainly and accurately known and is chosen beforehand by the engine control strategy by means of the spark advance control, thus the estimating of the MFB50 combustion index is relatively easy.

Instead, in internal combustion engines with spontaneous mixture ignition (i.e. in internal combustion engines operating according to the "Diesel" cycle and fed with oil or similar) the MFB50 combustion index is not used as control magnitude due to the considerable difficulties in estimating such MFB50 combustion index efficiently (i.e. with sufficient accuracy), effectively (i.e. rapidly and without employing excessive calculation power) and cost-effectively (i.e. without requiring the installation of additional components with respect to those normally present).

Currently, laboratory pressure sensors capable of directly measuring the pressure inside the cylinders are used to determine the MFB50 combustion index; however, such laboratory pressure sensors are very expensive and present a limited reliability in time and are thus only suitable for laboratory tests and not for an extensive use on standard production cars.

It has been announced the availability in the next future of a new generation of sensors of pressures for mass applications that are able to directly measure the pressure inside the cylinders and are integrated in the glow plugs. However, these new sensors of pressure will be at least initially very expensive and since they still haven't been used in mass production their actual reliability over time has not yet been fully demonstrated.

To solve the above problems in the patent application EP2022967A1 a method of estimating the MFB50 combustion index and of the indicated torque in a cylinder of a four stroke internal combustion engine with spontaneous mixture ignition provided with a drive shaft coupled to a phonic wheel presenting a number N of teeth has been proposed. The method of estimating comprises the steps of:

> reading the passage of each tooth of the phonic wheel in front of a sensor;
> determining the angular speed of the drive shaft at each tooth event of the phonic wheel;
> determining, by means of a frequency analysis the angular speeds of the drive shaft, at least one harmonic of the speed signal characterized by its own module and is own phase;
> determining an inverse mechanical model of the transmission which represents, in the frequency domain, the relation between the Fourier transforms of the angular speed and of the torque of the internal combustion engine;
> determining at least one torque harmonic characterized by its own module and by its own phase by applying the inverse mechanical model of the transmission to the speed signal harmonic;
> determining a first algebraic function which puts the MFB50 combustion index into relation with the phase of the n$^{th}$ torque harmonic and determining a second algebraic function which puts the indicated torque into relation with the module of the n$^{th}$ torque harmonic; and
> determining the MFB50combustion index by applying the first algebraic function to the n$^{th}$ torque harmonic and determining the indicated torque by applying the second algebraic function to the n$^{th}$ torque harmonic.

The method of estimating described in patent application EP2022967A1 is efficient (i.e. it allows to estimate the MFB50 combustion index and the indicated torque with remarkable accuracy), effective (i.e. it allows to estimate the MFB50 combustion index and the indicated torque quickly without committing an excessive computing power) and cost-effective (i.e. it does not require installation of additional components with respect to those normally present in a modern internal combustion engine operating according to the "Diesel" cycle).

However, the method of estimating described in patent application EP2022967A1 proposes to use an inverse mechanical model of the transmission relatively complex that in order to provide precise estimates requires also to consider the inertial torque due to the masses in reciprocating movement (i.e. the masses of the pistons). Considering the inertial torques requires knowledge of various engine parameters and results in a significant increase in computing power required and in calibration tests necessary to define the model see also US2009/0312931.

DISCLOSURE OF INVENTION

It is the object of the present invention to provide a method of estimating a combustion index and/or the indicated torque in a cylinder of a four stroke internal combustion engine with spontaneous mixture ignition, which method is free of the disadvantages described above and, in particular, consents to use a simpler inverse mechanical model of the transmission.

According to the present invention, there is provided a method of estimating a combustion index and/or the indicated torque in a cylinder of a four stroke internal combustion engine with spontaneous mixture ignition as claimed in the accompanying claims.

BRIEF DESCRIPTION OF THE DRAWINGS

The present invention will now be described with reference to the accompanying drawings which illustrate a non-limitative embodiment thereof, in which:

- figure 1 is a diagrammatic view of an internal combustion engine provided with a control unit which implements the method of estimating of the present invention; and
- figure 2 is a block chart which illustrates the operation of the control unit in figure 1.

PREFERRED EMBODIMENTS OF THE INVENTION

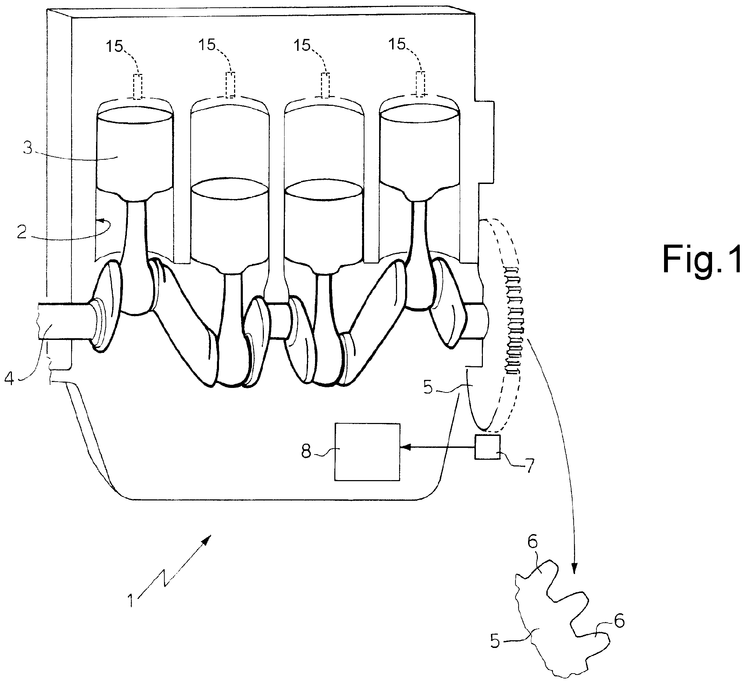

In figure 1, numeral 1 indicates as a whole an internal combustion engine fed with oil (i.e. operating according to the Diesel cycle which contemplates the spontaneous ignition of the mixture) and mounted aboard a road vehicle (not shown) which is provided with a transmission line (not shown) for transmitting the torque generated by the internal combustion engine 1 to the ground. The internal combustion engine 1 comprises four cylinders 2, each of which accommodates a corresponding piston 3 mechanically connected by means of a connecting rod to a drive shaft 4 for transmitting the force generated by the combustion inside the cylinder 2 to the drive shaft 4.

A phonic wheel 5 provided with a number N (e.g. 60) of teeth 6 is keyed onto the drive shaft 4 and is coupled to a sensor 7, which is adapted to detect the time elapsed between the passage of two consecutive teeth 6. The teeth 6 of the phonic wheel 5 are equally spaced out except for one pair of teeth 6 which are reciprocally arranged at a greater distance than the others to constitute a singularity which allows to accurately identify each tooth 6 and thus the angular position of the phonic wheel 5 (i.e. of the drive shaft 4). The engine 1 further comprises a control unit 8 which is connected to the sensor 7 and is adapted to estimate, for each cylinder 2, the corresponding MFB50 (50% Mass Fraction Burnt) combustion index which represents the engine angle (i.e. the crank angle) at which 50% of the fuel mass has been burnt inside the cylinder 2.

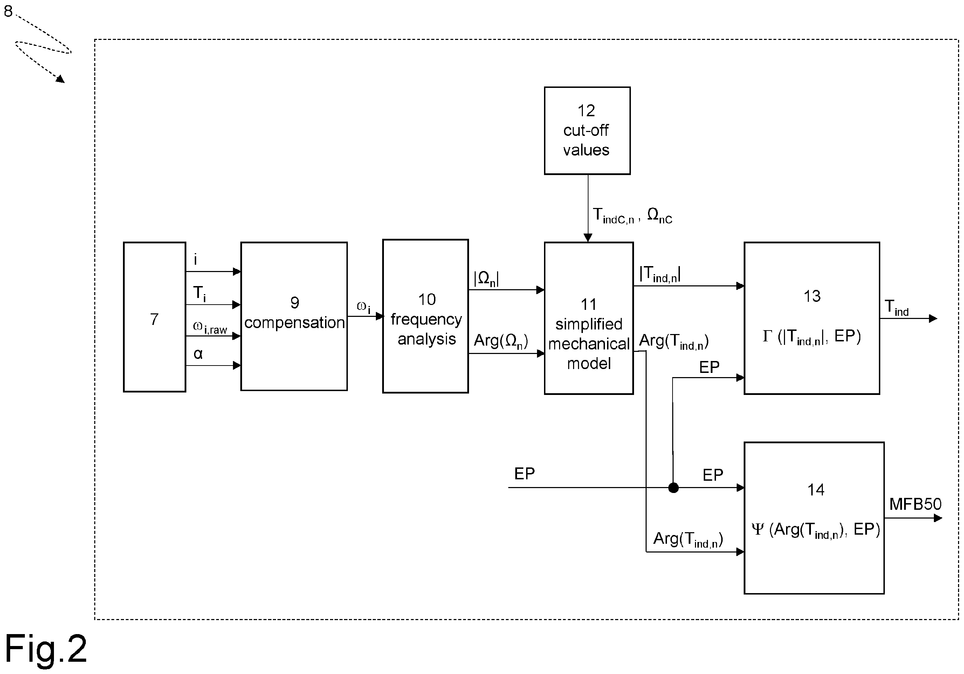

With reference to figure 2, there is described the mode used by the control unit 8 to estimate the MFB50 combustion index in each cylinder 2 by using the information provided by the sensor 7 coupled to the phonic wheel 5.

As previously mentioned, the phonic wheel 5 is provided with a number N (e.g. 60) of teeth 6, which are equally spaced out except for one pair of teeth 6 which are reciprocally arranged at a greater distance than the others to constitute a singularity which accurately allows to identify each tooth 6; in this manner, each tooth 6 is identified by a characteristic sequential number i included between 1 and N.

The sensor 7 detects the number i of the current tooth 6 ($i^{th}$ tooth), the time $T_i$ of the current tooth 6, i.e. the interval of time elapsing between the detections of the two angular events which characterize the current tooth 6, the raw angular speed ($\omega_{raw, i}$ of the current tooth 6, and the drive angle $\alpha$ (i.e. the angular position of the drive shaft 4 which is comprised between 0 and 4n radians). The raw angular speed ($\omega_{raw, i}$ of the $i^{th}$ tooth 6 is supplied by the following equation:

$$[1] \quad \omega_{i,raw} = \Delta\alpha_i \, / \, T_i$$

$\omega_{i,raw}$　　raw angular speed of the $i^{th}$ tooth 6 [rad/s];
$\Delta\alpha_i$　　angular amplitude of the $i^{th}$ tooth 6 [rad];
$T_i$　　time of the $i^{th}$ tooth 6 [s].

The magnitudes detected by sensor 7 and listed above are transmitted to a compensation block 9, which corrects each raw angular speed ($\omega_{raw, i}$ to compensate for the errors deriving from the inevitable manufacturing tolerances of the teeth 6. In principle, all teeth 6 have the same angular amplitude, but actually due to the inevitable manufacturing tolerances each tooth 6 presents a characteristic shape error, i.e. presents a characteristic angular amplitude more or less different from the theoretical angular amplitude; consequently, the angular speeds ($\omega_{raw, i}$ are afflicted by an intense noise which makes their use without an appropriate compensation practically impossible. In order to compensate for the shape errors of teeth 6, there is stored a vector ($\delta\mu_1$, $\delta\mu_2$, ... , $\delta\mu_i$ ... , $\delta\mu_N$) composed of N compensation values $\delta\mu_i$, each of which is associated to a corresponding $i^{th}$ tooth 6 and represents the difference between the actual angular amplitude of the $i^{th}$ tooth 6 and the theoretic amplitude of the $i^{th}$ tooth 6.

The corresponding compensated angular speed $\omega_i$ is calculated for each tooth 6 in the compensation block 9 by using the following equation:

$$[2] \quad \omega_i = (\Delta\alpha_i + \delta\mu_i) / T_i$$

$CO_i$      compensated angular speed of the $i^{th}$ tooth 6 [rad/s];
$\Delta\alpha_i$      angular amplitude of the $i^{th}$ tooth 6 [rad];
$\delta\mu_i$      compensation value $\delta\mu_i$ of the $i^{th}$ tooth 6 [rad];
$T_i$      time of the $i^{th}$ tooth 6 [s].

The calibration mode used to determine the compensation values $\delta\mu_i$ of the teeth 6 is disclosed in the patent application EP2022967A1 herewith incorporated by reference.

The compensated angular speeds $\omega_i$ calculated by the compensation block 9 are supplied to an analysis block 10, in which a frequency analysis of the known type (preferable a Fourier analysis using Fourier transforms) is performed on the compensated angular speeds $\omega_i$ to determine at least one speed signal harmonic $\Omega_n$. The harmonic generic $\Omega_n$ of the $n^{th}$ speed signal is always a complex number, characterized by its own module $|\Omega_n|$ and its own phase Arg ($\Omega_n$).

The harmonics $\Omega_n$ of the speed signal calculated by the analysis block 10 are supplied to a calculation block 11, in which there is implemented an algorithm based on an inverse mechanical model of the transmission which is symbolically indicated by the equation H(jώ) = T / $\Omega$ and represents, in the ώ frequency domain, the relation between the Fourier transforms of the angular speed $\Omega$ and of the torque T of the internal combustion engine 1. The function H(jώ) is a complex value function and allows to obtain the $n^{th}$ torque harmonic $T_n$ by means of the equation:

$$[3] \quad T_n = H(j\Omega_n) * \Omega_n$$

$T_n$      $n^{th}$ torque harmonic;
$H(j\Omega_n)$      inverse mechanical model of the transmission;
$\Omega_n$      $n^{th}$ speed signal harmonic.

It is important to point out that the torque $T_e$ generated by the internal combustion engine 1 is equal to the sum of the indicated torque $T_{ind}$, that is generated by the working fluid inside the cylinder 2, and the alternate torque $T_{alt}$ (inertial) due to the masses in reciprocating movement (i.e. the masses of the pistons 3). Obviously, in terms of motor control, the important parameter is the indicated torque $T_{ind}$ that directly depends on the combustion process in cylinder 2, while the alternate torque $T_{alt}$ is only a "disturbing factor" that cannot be governed in any way.

As non-binding example, the equations of the direct mechanical model H(jώ) of the transmission in the frequency domain can be as follows:
motor side Torque

$$[4] \quad T_{e,n} = j\widetilde{\omega}_e \cdot \frac{J_1 J_2 \widetilde{\omega}_e^{\,2} - (J_1 + J_2)(j\widetilde{\omega}_e \rho_{eb} + K_{eb})}{J_2 \widetilde{\omega}_e^{\,2} - j\widetilde{\omega}_e \rho_{eb} - K_{eb}} \cdot \omega_{e,n}$$

$$[5] \quad \widetilde{\omega}_e = \frac{n}{2}\omega_e$$

Inertial torque

$$[6] \quad T_{alt,n} = \frac{m_{eq} \cdot r^2}{2} \cdot \omega_e^2 \cdot e^{j\theta_{alt}}$$

Cylinders Torque

$$[7] \quad T_{ind,n} = T_{e,n} - T_{alt,n}$$

| | |
|---|---|
| $J_1$ | moment of inertia of an internal combustion engine 1; |
| $J_2$ | moment of inertia of the vehicle reported to the drive shaft 4; |
| $K_{eb}$ | stiffness of the transmission line; |
| $\rho_e b$ | damping coefficient of the transmission line; |
| j | imaginary unit; |
| n | harmonic order; |
| $\acute{\omega}_e$ | pulse; |
| $\omega_e$ | angular speed of the drive shaft 4; |
| $T_e$ | average torque generated by the internal combustion engine 1; |
| $Z_{alt,n}$ | alternate torque due to the masses in reciprocating movement; |
| $m_{eq}$ | masses in reciprocating movement; |
| $\theta_{alt}$ | phase factor of the inertia torque (alternate motion); |
| $T_{ind}$ | indicated torque. |

The inverse mechanical model of the transmission H(jώ) is derived from the above three equations [4], [6] and [7] of the direct mechanical model of the transmission by replacing the equation [4] and the equation [6] into the equation [7] and in such a way to link the indicated torque $T_{ind, n}$ to the angular speed ($\omega_{e, n}$ of the drive shaft 4; the relationship between the indicated torque $T_{ind, n}$ and the angular speed $\omega_{e, n}$ of the drive shaft 4 provides the inverse mechanical model of the transmission (the final formula of the inverse mechanical model of the transmission has not been reported because it adds no additional information and it is complex to write). It is important to note that in practice an experimental methodology is executed to obtain experimentally by points the transfer function of the inverse mechanical model of the transmission.

It is important to note that in order to obtain precise estimates, the inverse mechanical model H(jώ) of the transmission must consider the inertial torques due to masses in reciprocating movement (i.e. the masses of the pistons 3). So, in order to use directly the equation [3] one must use a complete inverse mechanical model H(jώ) of the transmission that considers the inertial torques due to masses in reciprocating movement (as described by the equation [6]). However, considering the inertial torque due to the masses in reciprocating movement it is complicated and considerably increases the complexity of the determination and experimental calibration in the laboratory of the inverse mechanical model H (jώ) of the transmission.

The $n^{th}$ torque harmonic $T_n$ is equal to the sum of the indicated $n^{th}$ torque harmonic $T_{ind, n}$ and the alternate indicated $n^{th}$ torque harmonic $T_{alt, n}$ (inertial) (as expressed in equation [8]); this condition also applies in cut-off condition (i.e. in the absence of combustion in cylinders 2 because of the absence of fuel injection) as expressed in equation [9]. It is important to note that at the same rotation speed (i.e. the same angular speed of rotation), the alternate torques (inertial) are identical regardless of the combustion in cylinders 2, because they depend solely on the masses in reciprocating movement; therefore, at the same rotation speed, the alternate $n^{th}$ torque $T_{alt, n}$ is identical to the alternate $n^{th}$ torque harmonic $T_{altC, n}$ in cut-off condition.

$$[8] \quad T_n = T_{ind,n} + T_{alt,n}$$

$$[9] \quad T_{nC} = T_{indC,n} + T_{alt,n}$$

| $T_n$ | $n^{th}$ torque harmonic; |
|---|---|
| $T_{ind,\,n}$ | indicated $n^{th}$ torque harmonic; |
| $T_{alt,\,n}$ | alternate $n^{th}$ torque harmonic; |
| $T_{nC}$ | $n^{th}$ torque harmonic in similar cut-off condition; |
| $T_{indC,\,n}$ | indicated $n^{th}$ torque harmonic in similar cut-off condition; |
| $T_{altC,\,n}$ | alternate $n^{th}$ torque harmonic in similar cut-off condition. |

Consequently, by performing the difference between the equations [8] and [9], at the same rotation speed, and therefore by simplifying the expressions of the alternate torques, one can obtain the equation [10] which relates the indicated $n^{th}$ torque harmonic $T_{ind,\,n}$ to the difference relatively to similar cut-off conditions (i.e. in the absence of combustion in cylinders 2 because of the absence of fuel injection and at the same speed).

$$[10] \quad T_{ind,n} = (T_n - T_{nC}) + T_{indC,n}$$

| $T_{ind,\,n}$ | indicated $n^{th}$ harmonic torque; |
|---|---|
| $T_n$ | $n^{th}$ torque harmonic; |
| $T_{nC}$ | $n^{th}$ torque harmonic in similar cut-off conditions; |
| $T_{indC,\,n}$ | indicated $n^{th}$ torque harmonic in similar cut-off conditions. |

Inserting the equation [3] into the equation [10] the equation [11] below is obtained:

$$[11] \quad T_{ind,n} = H(j\Omega_n) \ast (\Omega_n - \Omega_{nC}) + T_{indC,n}$$

| $T_{ind,\,n}$ | indicated $n^{th}$ harmonic torque; |
|---|---|
| $H(j\Omega_n)$ | inverse mechanical model of the transmission; |
| $\Omega_n$ | $n^{th}$ speed signal harmonic; |
| $\Omega_{nC}$ | $n^{th}$ speed signal harmonic in similar cut off condition; |
| $T_{indC,n}$ | indicated $n^{th}$ harmonic torque in similar cut-off condition. |

In equation [11] the indicated $n^{th}$ torque harmonic $T_{ind,n}$ is calculated as the difference relatively to the indicated $n^{th}$ harmonic torque $T_{indC,n}$ in similar cut-off condition (i.e. at the same speed of rotation).

In equation [11], the inverse mechanical model $H(j\omega)$ of the transmission is simplified since it does not consider the inertial torques due to the masses in reciprocating movement. This simplification does not cause any error because the inverse mechanical model $H(j\omega)$ of the transmission is used not in absolute terms, but only in derivative term relatively to a similar cut-off condition; by using the inverse mechanical model $H(j\omega)$ of the transmission only in derivative terms relatively to a similar cut-off condition, the contribution of the inertial torques due to the masses in reciprocating movement is null and therefore it can be ignored without causing any error (i.e. no approximation)

Obviously in order to be able to use the equation [11] that consents the use of the simplified inverse mechanical model $H(j\omega)$ of the transmission it is necessary to know at all speeds of rotation the parameters in cut-off condition, i.e. $n^{th}$ speed signal harmonic in cut-off condition and the indicated $n^{th}$ harmonic torque in cut-off condition (which are complex numbers characterized by their own module $|\Omega_{nC}|$ and $|T_{indC,n}|$ and their own phase Arg $(\Omega_{nC})$ and Arg $(T_{indC,n})$).

For example, it is sufficient to know the parameters in cut-off condition for all the functioning range of the internal combustion engine 1 in terms of frequency (from the maximum to minimum value) by minimum step of 100-300 rpm (and by interpolating in order to obtain the intermediate values).

In order to determine the parameters in cut-off conditions a first way comports executing a series of measurements even with additional laboratory measurement sensors during a first calibration experimental phase in laboratory.

In order to determine the parameters in cut-off conditions a first way comports using a learning strategy that is implemented in the control unit 8 and it is executed during the normal functioning of the internal combustion engine 1 (in particular, the learning strategy can be executed every time the internal combustion engine 1 is in cut-off conditions).

This learning strategy requires to determine through simple analysis of frequency of the angular speed $\omega_i$ compensating the $n^{th}$ speed signal harmonic $\Omega_{nC}$ in cut-off conditions and requires to determine the indicated $n^{th}$ harmonic torque $T_{indC,n}$ in cut-off condition by using an algebraic function $\Lambda$ that uses a set of engine parameters EP of the internal combustion engine 1 according to the following equation:

$$[12] \quad T_{indC,n} = \Lambda\ (EP)$$

$T_{indC,n}$     indicated $n^{th}$ harmonic torque in similar cut-off condition;

EP     EP set of engine parameters of an internal combustion engine 1 (usually the speed of rotation of drive shaft 4 and the suction pressure, i.e. the pressure inside an intake manifold).

It is important to note that the algebraic function $\Lambda$. is at the same time easy to define and has good accuracy since when operating in cut-off condition the combustion torque is null and therefore the remaining torque is only due to pumping and to the masses in reciprocating movement and so it is easy to correlate it to the rotation speed and suction pressure. Normally, one would use an experimental methodology to obtain experimentally through points the algebraic function $\Lambda$.

According to a preferred form of implementation, to determine the parameters in cut-off conditions both ways described above are followed: in a memory unit 8 of the new control unit 12 the parameters, determined in cut-off conditions in a experimental calibration phase in laboratory are stored and therefore during the life of the internal combustion engine 1 the parameters in the initial cut-off conditions are continuously (cyclically) updated to follow both the time derivative, and the constructive derivative, i.e. the specificity of the internal combustion engine 1 (the parameters in cut-off conditions stored initially are averages referring to an internal combustion engine 1).

It is worth noting that in the case of estimation of indicated torque $T_{ind}$ and of average MFB50 combustion index of a complete engine cycle (4 consecutive combustions in the four cylinders 2) is sufficient to store a single set of parameter values in cut-off conditions for each cycle of operation of an internal combustion engine 1 (equivalent to four full rotations of the drive shaft 4), otherwise if one wants to estimate the indicated torque $T_{ind}$ and the MFB50 combustion index for each combustion (i.e. for each cylinder) for each operating cycle of the internal combustion engine (equivalent to four full rotations of the drive shaft 4) four sets of parameter values in cut-off conditions should be stored, each corresponding to each cylinder 2 (i.e. calculated in the angular window corresponding to the cylinder 2).

As shown in Figure 2, the calculation block of the control unit 8 uses the inverse mechanical model $H(j\omega)$ of the transmission simplified to calculate the indicated $n^{th}$ harmonic torque $T_{ind,n}$ by equation [11] and using the parameters of cut-off condition provided by memory 12.

As already mentioned above, the harmonic torque $T_{ind,n}$ (like the $\Omega_{nof}$ speed signal harmonic) is a complex number characterized by its own module $|T_{ind,n}|$ and its own phase $\mathrm{Arg}\ (T_{ind,n})$. The module $|T_{ind,n}|$ of the indicated $n^{th}$ harmonic torque $T_{ind,n}$ calculated by the calculation block 11 is supplied to a calculation block 13, wherein an algebraic function $\Gamma$ is implemented which relates the indicated torque $T_{ind}$ with the module $|T_{ind,n}|$ of the indicated $n^{th}$ harmonic torque $T_{ind,n}$ using the following equation:

$$[13] \quad T_{ind} = \Gamma\ (|T_{ind,n}|,\ EP)$$

$T_{ind}$     indicated torque;

$|T_{ind,n}|$     module of the indicated $n^{th}$ harmonic torque $T_{ind,n}$;

EP     EP set of engine parameters of an internal combustion engine 1 (usually the speed of rotation of drive shaft 4 and the suction pressure, i.e. the pressure inside an intake manifold).

As a non-biding example, the algebraic function $\Gamma$, which relates the indicated torque $T_{ind}$ with the module $|T_{ind,n}|$ of the indicated $n^{th}$ harmonic torque $T_{ind,n}$ could be defined using the following equation:

$$[14] \quad T_{ind} = b_0 + b_1\ |T_{ind,n}| + b_2\ p + b_3\ n$$

$T_{ind}$     indicated torque $T_{ind}$;

$|T_{ind,n}|$     module of the indicated $n^{th}$ harmonic torque $T_{ind,n}$;

p          suction pressure;
n          speed of rotation of the drive shaft 4;
bi         coefficients.

The values of the coefficients $b_i$ can be obtained experimentally by minimizing the mean square error between a set of measured values of the indicated torque $T_{ind}$ and a corresponding set of estimated values of the indicated torque $T_{ind}$.

The phase Arg ($T_{ind,n}$) of the harmonic torque $T_n$ calculated by the calculation block 11 is supplied to a calculation block 14, which implements an algebraic function $\Psi$ that relates the MFB50 combustion index to the phase Arg($T_{ind,n}$) of the indicated nth harmonic torque $T_{n, ind}$ using the following equation:

$$[15] \quad MFB50 = \Psi \ (Arg(T_{ind,n}), \ EP)$$

MFB50          MFB50 combustion index;
Arg ($T_{ind, n}$)     phase of the indicated nth harmonic torque $T_{ind, n}$;
EP             set of engine parameters of an internal combustion engine 1 (usually the speed of rotation of drive shaft 4 and the suction pressure, i.e. the pressure inside an intake manifold).

As non-binding example, the algebraic function $\Psi$ that links the MFB50 combustion index to the phase Arg($T_{n, ind}$) of the indicated nth harmonic torque $T_{n, ind}$ could be defined using the following equation:

$$[16] \quad MFB50 = c_0 + c_1 \ \Phi + c_2 \ \Phi^2 + c_3 \ p \ \Phi + c_4 \ p^2 \ \Phi$$

MFB50          combustion index;
$\Phi$         phase of the indicated nth harmonic torque $T_{ind, n}$;
p              suction pressure;
$C_i$          coefficients.

The values of the coefficients $c_i$ can be obtained experimentally by minimizing the mean square error between a set of measured values of the MFB50 combustion index and a corresponding set of estimated values of the MFB50 combustion index.

In the above equations [3] - [16] the reference has always been to the nth harmonic: the actual order of the nth harmonic (i.e. the actual value of the number "n") depends on the number of cylinders 2 of the internal combustion engine 1 and the type of estimate desired. For example, it is possible to consider only the harmonic characteristic of the internal combustion engine 1 that depends on the number of cylinders 2 and on the sequence of combustions (the harmonic of order four for an internal combustion engine with four cylinders 2 and equispaced combustions). Alternatively, it is possible to consider more harmonics of different order in particular for the relative balancing of the cylinders 2.

According to a possible form of implementation, the equation [11] can be used to derive experimentally the inverse mechanical model H(jὠ) of the transmission by expressing the inverse mechanical model H(jὠ) of the transmission as a function of the other factors as in equation:

$$[17] \quad H(j\Omega_n) = (T_{ind,n} - T_{indC,n}) / (\Omega_n - \Omega_{nC})$$

$H(j\Omega_n)$     inverse mechanical model of the transmission;
$T_{ind, n}$      indicated nth harmonic torque;
$T_{indC, n}$     indicated nth harmonic torque in similar cut-off condition;
$\Omega_n$        nth speed signal harmonic;
$\Omega_{nC}$     nth speed signal harmonic in similar cut-off condition.

During an experimental calibration phase in laboratory, the inverse mechanical model H(jὠ) of the transmission is determined by the equation [17] using a series of measurements made by including laboratory measurement sensors that read the pressure inside each cylinder 2.

The estimation method described above can be used in an internal combustion engine 1 without sensors of pressure that directly measure the pressure inside the cylinders 2 to estimate the MFB50 combustion index and indicated torque $T_{ind}$.

Moreover, the estimation method described above can be used in an internal combustion engine 1 equipped, in only a part of the cylinders, with sensors of pressure that directly measure the pressure inside the cylinders to estimate the MFB50 combustion index and the indicated torque $T_{ind}$ related to the cylinders without the sensors of pressure that directly measure the pressure inside the cylinders; in other words, in some cylinders equipped with sensors of pressure the MFB50 combustion index and the indicated torque $T_{ind}$ are calculated by direct measurement of the pressure inside the cylinders, while in other cylinders without pressure sensors the MFB50 combustion index and the indicated torque $T_{ind}$ are calculated using the estimation method described above.

Finally, the estimation method described above can be used in an internal combustion engine 1 equipped with sensors of pressure 15 that directly measure the pressure inside the cylinder 2 to diagnose a malfunction of the sensors of pressure 15 themselves; this diagnosis is obtained by comparing the values of the MFB50 combustion index and the indicated torque $T_{ind}$ determined by measuring the pressure using the values of the MFB50 combustion index and the indicated torque $T_{ind}$ determined by the method of estimating described above: if the difference (in percentage) is too high (i.e. above a predetermined threshold), then a malfunction is diagnosed on the corresponding sensor of pressure 15.

The method of estimating described above of the MFB50 combustion index and the indicated torque $T_{ind}$ presents a number of advantages, as it is efficient (i.e. it allows to estimate the MFB50 combustion index and the indicated torque $T_{ind}$ with remarkable accuracy), effective (i.e. it allows to estimate the MFB50 combustion index and the indicated torque $T_{ind}$ quickly and without going into excessive computing power) and cost-effective (i.e. it does not require installation of additional components other than those normally found in a modern internal combustion engine operating on "Diesel" cycle).

Thanks to the ability to estimate the MFB50 combustion index and the indicated torque $T_{ind}$ in each cylinder 2, it is possible to make a feedback control of the combustion process (using the MFB50 combustion index as a variable feedback) through which it is possible to reduce fuel consumption and pollutant emissions maintaining the same performance; for example, through this feedback control, it is possible to improve significantly the control of the stability of premixed combustion with high EGR rate. Moreover, the MFB50 combustion index in each cylinder 2 can be advantageously used to govern the stress on connecting rods and the phenomena of detonation. Finally, the indicated torque $T_{ind}$ produced by each cylinder 2 can be effectively used to further improve the control of the combustion process.

Finally, the method of estimating described above allows the use of an inverse mechanical model $H(j\dot\omega)$ of the transmission simplified that does not consider the inertial torques due to masses in reciprocating movement; this simplification on one hand does not cause any error (i.e. no approximation) and on the other hand can significantly reduce the complexity of the inverse mechanical model $H(j\omega)$ of the transmission with obvious advantages in terms of computing power required and calibration tests necessary to define the model.

It is important to clarify that the method of estimating described above has advantageous applications in an internal combustion engine with spontaneous mixture ignition (i.e., operating on diesel cycle) or in an internal combustion engine with controlled ignition of the mixture (i.e. operating according to the Otto cycle).

**Claims**

1. A method of estimating a combustion index (MFB50) and/or the indicated torque ($T_{ind}$) in a cylinder (2) of a four stroke internal combustion engine (1) with spontaneous mixture ignition provided with a drive shaft (4) coupled to a phonic wheel (5) presenting a number N of teeth (6); the method of estimating comprises the steps of:

    determining the angular speed ($\omega_i$) of the drive shaft (4) ;
    determining, by means of a frequency analysis of the angular speed ($\omega_i$) of the drive shaft (4), at least one harmonic ($\Omega_n$) of the speed signal **characterized by** its own module ($|\Omega_n|$) and is own phase (Arg($\Omega_n$));
    determining an inverse mechanical model ($H(j\dot\omega)$) of the transmission which represents, in the ($\dot\omega$) frequency domain, the relation between the Fourier transforms of the angular speed ($\Omega$) and of the torque (T) of the internal combustion engine (1);
    determining at least one indicated torque harmonic ($T_{ind,\,n}$) **characterized by** its own module ($|T_{ind,\,n}|$) and by its own phase (Arg($T_{ind,\,n}$)) by applying the inverse mechanical model ($H(j\dot\omega)$) of the transmission to the speed signal harmonic ($\Omega_n$);
    determining a first algebraic function ($\Psi$) which puts the combustion index (MFB50) into relation with the phase (Arg($T_{ind,\,n}$)) of the $n$th indicated torque harmonic ($T_{ind,\,n}$) and/or determining a second algebraic function ($\Gamma$) which puts the indicated torque ($T_{ind}$) into relation with the module ($|T_{ind,\,n}|$) of the $n^{th}$ indicated torque harmonic ($T_{ind,\,n}$); and

determining the combustion index (MFB50) by applying the first algebraic function ($\Psi$) to the $n^{th}$ indicated torque harmonic ($T_{ind, n}$) and/or determining the indicated torque ($T_{ind}$) by applying the second algebraic function ($\Gamma$) to the $n^{th}$ indicated torque harmonic ($T_{ind, n}$);

the method of estimating is **characterized in that** the step of determining at least one indicated torque harmonic (Tind,n) uses the following equation:

$$[11] \quad T_{ind,n} = H(j\Omega_n) * (\Omega_n - \Omega_{nC}) + T_{indC,n}$$

$T_{ind, n}$ $n^{th}$ indicated torque harmonic;
$H(j\Omega_n)$ inverse mechanical model of the transmission;
$\Omega_n$ $n^{th}$ speed signal harmonic;
$\Omega_{nC}$ $n^{th}$ speed signal harmonic in analogous cut-off condition;
$T_{indC, n}$ $n^{th}$ indicated torque harmonic in analogous cut-off condition.

2. The method of estimating according to claim 1, wherein the inverse mechanical model ($H(j\acute\omega)$) of the transmission does not take into account the inertial torques due to the masses in reciprocating motion of the internal combustion engine (1).

3. The method of estimating according to claim 1 or 2, wherein the inverse mechanical model ($H(j\acute\omega)$) of the transmission uses the following equation applied to a series of experimental data related to the whole functioning range of internal combustion engine (1):

$$[17] \quad H(j\Omega_n) = (T_{ind,n} - T_{indC,n})/(\Omega_n - \Omega_{nC})$$

$H(j\Omega_n)$ inverse mechanical model of the transmission;
$T_{ind, n}$ $n^{th}$ indicated torque harmonics;
$T_{indC, n}$ $n^{th}$ indicated torque harmonic in similar cut-off condition;
$\Omega_n$ $n^{th}$ speed signal harmonic;
$\Omega_{nC}$ $n^{th}$ speed signal harmonic in similar cut-off condition.

4. The method of estimating according to claim 1, 2 o 3 and comprising the additional step of storing in a memory (12) at any speed of rotation, the parameters in cut-off conditions, i.e. the $n^{th}$ speed signal harmonic ($\Omega_{nC}$) in cut-off condition and the $n^{th}$ indicated torque harmonic ($T_{indC, n}$) in cut-off condition.

5. The method of estimating according to claim 4 and comprising the additional steps of:

initially storing in the memory (12) parameters in standard cut-off condition determined during the experimental calibration in laboratory; e
updating cyclically the parameters in cut-off condition during the life of the internal combustion engine (1).

6. The method of estimating according to one of the claims from 1 to 5 and comprising the additional steps of:

measuring directly the pressure inside the cylinder (2) through a sensor of pressure (15);
determining the combustion index (MFB50) and/or the $n^{th}$ indicated torque harmonic ($T_{ind}$) as a function of the pressure inside the cylinder (2); and
diagnosing the proper functioning of the sensors of pressure (15) by comparing the combustion index (MFB50) and/or the indicated torque ($T_{ind}$), determined as a function of the pressure inside the cylinder (2), to the corresponding combustion index (MFB50) and/or indicated torque ($T_{ind}$) determined in accordance with the method of estimating.

**Patentansprüche**

1. Verfahren zur Einschätzung eines Verbrennungsindex (MFB50) und/oder des angezeigten Drehmoments ($T_{ind}$) in einem Zylinder (2) eines Viertakt-Verbrennungsmotors (1) mit spontaner Mischzündung, versehen mit einer Antriebswelle (4), die an ein Impulsrad (5) gekoppelt ist, das eine Anzahl N von Zähnen (6) aufweist; das Einschätzverfahren beinhaltet folgende Schritte:

Bestimmen der Winkelgeschwindigkeit ($\omega_i$) der Antriebswelle (4) ;

Bestimmen, mittels einer Frequenzanalyse der Winkelgeschwindigkeit ($\omega_i$) der Antriebswelle (4), mindestens einer Oberschwingung ($\Omega_n$) des Geschwindigkeitssignals, **gekennzeichnet durch** ihr eigenes Modul ($|\Omega_n|$) und ihre eigene Phase ($Arg(\Omega_n)$);

Bestimmen eines inversen mechanischen Modells ($H(j\dot{\omega})$) der Übertragung, die im ($\dot{\omega}$)-Frequenzbereich die Beziehung zwischen den Fourier-Transformationen der Winkelgeschwindigkeit ($\Omega$) und des Drehmoments (T) des Verbrennungsmotors (1) repräsentiert;

Bestimmen mindestens einer angezeigten Oberschwingung des Drehmoments ($T_{ind, n}$), **gekennzeichnet durch** ihr eigenes Modul ($|T_{ind, n}|$) und **durch** ihre eigene Phase ($Arg(T_{ind, n})$), **durch** Anwenden des inversen mechanischen Modells ($H(j\dot{\omega})$) der Übertragung auf die Oberschwingung des Geschwindigkeitssignals ($\Omega_n$);

Bestimmen einer ersten algebraischen Funktion ($\Psi$), die den Verbrennungsindex (MFB50) mit der Phase ($Arg(T_{ind, n})$) der n-ten angezeigten Oberschwingung des Drehmoments ($T_{ind, n}$) in Beziehung setzt, und/oder Bestimmen einer zweiten algebraischen Funktion ($\Gamma$), die das angezeigte Drehmoment ($T_{ind}$) mit dem Modul ($|T_{ind, n}|$) der n-ten angezeigten Oberschwingung des Drehmoments ($T_{ind, n}$) in Beziehung setzt; und

Bestimmen des Verbrennungsindex (MFB50) **durch** Anwenden der ersten algebraischen Funktion ($\Psi$) auf die n-te angezeigte Oberschwingung des Drehmoments ($T_{ind, n}$) und/oder Bestimmen des angezeigten Drehmoments ($T_{ind}$) **durch** Anwenden der zweiten algebraischen Funktion ($\Gamma$) auf die n-te angezeigte Oberschwingung des Drehmoments ($T_{ind, n}$);

das Einschätzverfahren ist **dadurch gekennzeichnet, dass** beim Schritt des Bestimmens mindestens einer angezeigten Oberschwingung des Drehmoments ($T_{ind, n}$) folgende Gleichung angewandt wird:

$$[11] \quad T_{ind,n} = H(j\Omega_n) * (\Omega_n - \Omega_{nC}) + T_{indC,n}$$

$T_{ind, n}$ n-te angezeigte Oberschwingung des Drehmoments;
$H(j\Omega_n)$ inverses mechanisches Modell der Übertragung;
$\Omega_n$ n-te Oberschwingung des Geschwindigkeitssignals;
$\Omega_{nC}$ n-te Oberschwingung des Geschwindigkeitssignals in analogem Absteuerzustand;
$T_{indC, n}$ n-te angezeigte Oberschwingung des Drehmoments in analogem Absteuerzustand.

2. Einschätzverfahren nach Anspruch 1, wobei das inverse mechanische Modell ($H(j\dot{\omega})$) der Übertragung die Trägheitsmomente aufgrund der in Hin- und Herbewegung befindlichen Massen des Verbrennungsmotors (1) nicht berücksichtigt.

3. Einschätzverfahren nach Anspruch 1 oder 2, wobei beim inversen mechanischen Modell ($H(j\dot{\omega})$) der Übertragung folgende Gleichung auf eine Reihe experimenteller Daten, die sich auf den gesamten Funktionsbereich des Verbrennungsmotors (1) beziehen, angewandt wird:

$$[17] \quad H(j\Omega_n) = (T_{ind,n} - T_{indC,n}) / (\Omega_n - \Omega_{nC})$$

$H(j\Omega_n)$ inverses mechanisches Modell der Übertragung;
$T_{ind, n}$ n-te angezeigte Oberschwingung des Drehmoments;
$T_{indC, n}$ n-te angezeigte Oberschwingung des Drehmoments in ähnlichem Absteuerzustand;
$\Omega_n$ n-te Oberschwingung des Geschwindigkeitssignals;
$\Omega_{nC}$ n-te Oberschwingung des Geschwindigkeitssignals in ähnlichem Absteuerzustand.

4. Einschätzverfahren nach Anspruch 1, 2 oder 3 und den zusätzlichen Schritt beinhaltend, bei dem bei einer beliebigen Drehzahl die Parameter in Absteuerzuständen, d.h. die n-te Oberschwingung des Geschwindigkeitssignals ($\Omega_{nC}$) im Absteuerzustand und die n-te angezeigte Oberschwingung des Drehmoments ($T_{indC, n}$) im Absteuerzustand, in einem Speicher (12) abgespeichert werden.

**5.** Einschätzverfahren nach Anspruch 4 und folgende zusätzliche Schritte beinhaltend:

zuerst Abspeichern von Parametern im normalen Absteuerzustand, die während der experimentellen Kalibrierung im Labor bestimmt wurden, im Speicher (12); und
zyklisches Aktualisieren der Parameter im Absteuerzustand während der Lebensdauer des Verbrennungsmotors (1).

**6.** Einschätzverfahren nach einem der Ansprüche 1 bis 5 und folgende zusätzliche Schritte beinhaltend:

direktes Messen des Drucks im Zylinder (2) durch einen Drucksensor (15);
Bestimmen des Verbrennungsindex (MFB50) und/oder der n-ten angezeigten Oberschwingung des Drehmoments ($T_{ind}$) in Abhängigkeit vom Druck im Zylinder (2); und
Diagnostizieren der ordnungsgemäßen Funktion der Drucksensoren (15) durch Vergleichen des Verbrennungsindex (MFB50) und/oder des angezeigten Drehmoments ($T_{ind}$), das in Abhängigkeit vom Druck im Zylinder (2) bestimmt wurde, mit dem entsprechenden Verbrennungsindex (MFB50) und/oder angezeigten Drehmoment ($T_{ind}$), das gemäß dem Einschätzverfahren bestimmt wurde.

**Revendications**

**1.** Procédé d'estimation d'un indice de combustion (MFB50) et/ou du couple indiqué ($T_{ind}$) dans un cylindre (2) d'un moteur à combustion interne à quatre temps (1) avec un allumage de mélange spontané pourvu d'un arbre d'entraînement (4) accouplé à une roue phonique (5) présentant un nombre N de dents (6) ; le procédé d'estimation comprend les étapes :

de détermination de la vitesse angulaire ($\omega_i$) de l'arbre d'entraînement (4) ;
de détermination, au moyen d'une analyse fréquentielle de la vitesse angulaire ($\omega_i$) de l'arbre d'entraînement (4), d'au moins un harmonique ($\Omega_n$) du signal de vitesse **caractérisé par** son module propre ($|\Omega_n|$) et sa phase propre ($Arg(\Omega_n)$ ;
de détermination d'un modèle mécanique inverse ($H(j(\acute{\omega}))$) de la transmission qui représente, dans le domaine fréquentiel ($\acute{\omega}$), la relation entre les transformations de Fourier de la vitesse angulaire ($\Omega$) et du couple (T) du moteur à combustion interne (1) ;
de détermination d'au moins un harmonique de couple indiqué ($T_{ind, n}$) **caractérisé par** son module propre ($|T_{ind, n}|$) et par sa phase propre ($Arg(T_{ind, n})$) en appliquant le modèle mécanique inverse ($H(j\acute{\omega})$) de la transmission à l'harmonique de signal de vitesse ($\Omega_n$) ;
de détermination d'une première fonction algébrique ($\Psi$) qui met l'indice de combustion (MFB50) en relation avec la phase ($Arg(T_{ind, n})$) du nième harmonique de couple indiqué ($T_{ind, n}$) et/ou de détermination d'une deuxième fonction algébrique ($\Gamma$) qui met le couple indiqué ($T_{ind}$) en relation avec le module ($|T_{ind, n}|$) du nième harmonique de couple indiqué ($T_{ind, n}$) ; et
de détermination de l'indice de combustion (MFB50) en appliquant la première fonction algébrique ($\Psi$) au nième harmonique de couple indiqué ($T_{ind, n}$) et/ou de détermination du couple indiqué ($T_{ind}$) en appliquant la deuxième fonction algébrique ($\Gamma$) au nième harmonique de couple indiqué ($T_{ind, n}$) ;
le procédé d'estimation est **caractérisé en ce que** l'étape de détermination d'au moins un harmonique de couple indiqué ($T_{ind, n}$) utilise l'équation suivante :

$$[11] \quad T_{ind,n} = H(j\Omega_n) \ * \ (\Omega_n \ - \ \Omega_{nC}) \ + \ T_{indC,n}$$

où

$T_{ind, n}$ : nième harmonique de couple indiqué ;
$H(j\Omega_n)$ : modèle mécanique inverse de la transmission ;
$\Omega_n$ : nième harmonique de signal de vitesse ;
$\Omega_{nC}$ nième harmonique de signal de vitesse dans une condition de coupure analogue ;
$T_{indC, n}$ : nième harmonique de couple indiqué dans une condition de coupure analogue.

**2.** Procédé d'estimation selon la revendication 1, dans lequel le modèle mécanique inverse ($H(j\acute{\omega})$) de la transmission

ne prend pas en compte les couples inertiels dus aux masses en mouvement de va-et-vient du moteur à combustion interne (1).

3. Procédé d'estimation selon la revendication 1 ou 2, dans lequel le modèle mécanique inverse ($H(J\overset{\prime}{\omega})$) de la transmission utilise l'équation suivante appliquée à une série de données expérimentales associées à la plage de fonctionnement entière du moteur à combustion interne (1) :

$$[17] \quad H(j\Omega_n) = (T_{ind,n} - T_{indC,n})/(\Omega_n - \Omega_{nC})$$

où

H($j\Omega_n$) : modèle mécanique inverse de la transmission ;
$T_{ind,\,n}$ : $n^{ième}$ harmonique de couple indiqué ;
$T_{indC,\,n}$ : $n^{ième}$ harmonique de couple indiqué dans une condition de coupure similaire ;
$\Omega_n$ : $n^{ième}$ harmonique de signal de vitesse ;
$\Omega_{nC}$ : $n^{ième}$ harmonique de signal de vitesse dans une condition de coupure similaire.

4. Procédé d'estimation selon la revendication 1, 2 ou 3, et comprenant l'étape supplémentaire de mémorisation, dans une mémoire (12), à n'importe quelle vitesse de rotation, des paramètres dans des conditions de coupure, c'est-à-dire le nième harmonique de signal de vitesse ($\Omega_{nC}$) dans une condition de coupure et le nième harmonique de couple indiqué ($T_{indC,\,n}$) dans une condition de coupure.

5. Procédé d'estimation selon la revendication 4 et comprenant les étapes supplémentaires :

de mémorisation initiale, dans la mémoire (12), des paramètres dans une condition de coupure standard déterminée pendant l'étalonnage expérimental en laboratoire ;
de mise à jour cyclique des paramètres dans une condition de coupure pendant la durée de vie du moteur à combustion interne (1).

6. Procédé d'estimation selon l'une des revendications 1 à 5 et comprenant les étapes supplémentaires :

de mesure directement de la pression à l'intérieur du cylindre (2) par l'intermédiaire d'un capteur de pression (15) ;
de détermination de l'indice de combustion (MFB50) et/ou du nième harmonique de couple indiqué ($T_{ind}$) en fonction de la pression à l'intérieur du cylindre (2) ; et
de diagnostic du fonctionnement correct des capteurs de pression (15) en comparant l'indice de combustion (MFB50) et/ou le couple indiqué ($T_{ind}$), déterminés en fonction de la pression à l'intérieur du cylindre (2), à l'indice de combustion (MFB50) et/ou au couple indiqué ($T_{ind}$) correspondants déterminés conformément au procédé d'estimation.

Fig.1

EP 2 431 595 B1

EP 2 431 595 B1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2022967 A1

- US 20090312931 A